# EUROPEAN PATENT APPLICATION

(11) **EP 1 727 032 A2**
(43) Date of publication of application: **29.11.2006**
(21) Application number: 06251977.2
(22) Date of filing: 07.04.2006
(51) Int. Cl.: G06F 3/048

(54) **Scrolling method and apparatus using plurality of blocks into which items are classified**

(30) Priority: 25.05.2005 KR 20050044235
(71) Applicant: Samsung Electronics Co., Ltd., Suwon-si, Gyeonggi-Do (KR)
(72) Inventor: Han, Sang-jun, Seoul (KR)
(74) Representative: Davies, Robert Ean

(57) **Abstract**

A method and apparatus for adjusting scrolling speed according to the location of an item currently being highlighted on a screen in a block containing the item. The method includes: measuring a distance between the item currently being highlighted on the screen and a last item of the block containing the item; and reducing the scrolling speed if the measured distance is smaller than a predefined value. Therefore, it is possible for a user to identify the location of desired data while quickly scrolling through a considerable amount of data on a screen.

## Description

Devices, systems, and methods consistent with the invention relate to scrolling through a plurality of items, and more particularly, to adjusting the speed of scrolling through a plurality of items, and thus enhancing the efficiency of searching through the items.

Scrolling is a method of enabling a plurality of items to be displayed together on a single screen, and is widely used in desktop computers, personal digital assistants (PDAs), mobile phones, and MP3 players. However, as the number of items to be displayed together on a screen increases, the efficiency of searching through the items by scrolling decreases. With recent developments in storage media and a great increase in an amount of data that is capable of being stored in various devices, various methods of searching through a considerable amount of data by adjusting the speed of scrolling through a plurality of items, either continually or incrementally over stages, have been suggested.

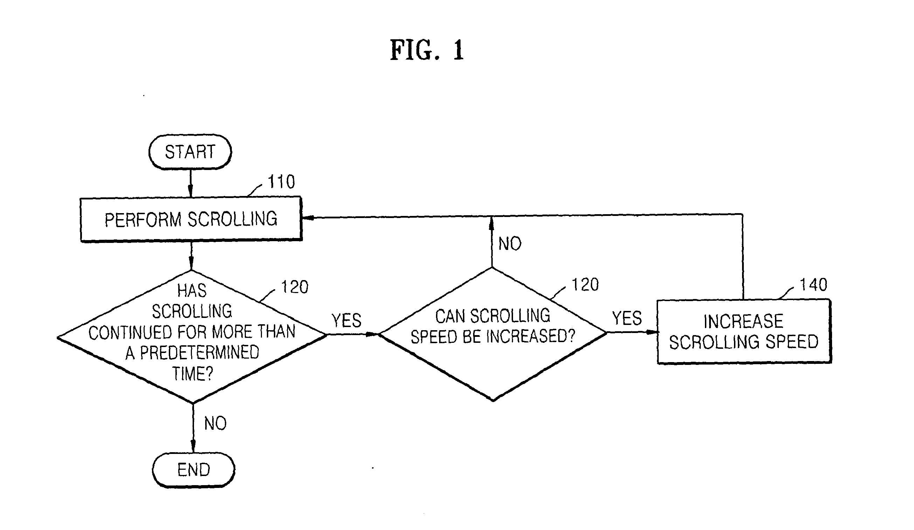

FIG. 1 is a flowchart illustrating a related-art scrolling method. Referring to FIG. 1, in operation 110, scrolling is performed in response to user input. In operation 130, if it is determined in operation 120 that the scrolling has continued for more than a predetermined amount of time, it is determined whether to increase the scrolling speed. Thereafter, in operation 140, if the scrolling speed has not yet reached its maximum, the scrolling speed is increased, and the method returns to operation 110. On the other hand, if it is determined in operation 130 that the scrolling speed has already reached its maximum, the method returns directly to operation 110 without increasing the scrolling speed. In this manner, even after the scrolling speed is increased in operation 140, it may be increased again continually or incrementally as long as the scrolling continues, and as long as the maximum scrolling speed has not been reached.

This scrolling method illustrated in FIG. 1 does not require repetitive user manipulations and can enable a user to search through a considerable amount of information within a short period of time. However, when scrolling through a plurality of items at high speed, the user may accidentally scroll past a desired item or may not be able to determine the location of the desired item relative to other items, thus making it difficult to efficiently search for the desired item.

Embodiments of the invention provide a scrolling method and apparatus in which items are classified into a plurality of blocks and the speed of scrolling through a plurality of the items displayed on a screen can be adjusted with reference to the locations of the items in the blocks such that a cursor can jump from one block to another.

According to an aspect of the invention, there is provided a method of scrolling through a plurality of items that are classified into a plurality of blocks, the method comprising: measuring a distance between a current item currently being highlighted on a screen and a last item of a block containing the current item; and controlling scrolling speed based on the measured distance.

Preferably, the controlling may include increasing the scrolling speed if the measured distance is greater than a predefined value.

Preferably, the controlling may include reducing the scrolling speed if the measured distance is smaller than a predefined value.

Preferably, the controlling may include maintaining the scrolling speed at a predetermined level corresponding to the measured distance.

According to another aspect of the invention, there is provided a computer readable medium storing a computer program for executing a method of scrolling through a plurality of items that are classified into a plurality of blocks, the method comprising: measuring a distance between a current item currently being highlighted on a screen and a last item of a block containing the current item; and controlling scrolling speed based on the measured distance.

According to another aspect of the invention, there is provided an apparatus for scrolling through and displaying a plurality of items that are classified into a plurality of blocks, the apparatus comprising: a distance measurement unit operable to measure a distance between a current item currently being highlighted on a screen and a last item of a block containing the current item; and a scrolling control unit operable to control scrolling speed based on the measured distance.

For a better understanding of the invention, and to show how embodiments of the same may be carried into effect, reference will now be made, by way of example, to the accompanying diagrammatic drawings in which:
FIG. 1 is a flowchart illustrating a related-art scrolling method;
FIG. 2 is a diagram for explaining a scrolling method according to an exemplary embodiment of the invention;
FIG. 3 is a flowchart illustrating a scrolling method according to an exemplary embodiment of the invention;
FIG. 4 is a block diagram of a scrolling apparatus according to an exemplary embodiment of the invention;
FIGS. 5A through 5D are examples of a screen displayed by a scrolling apparatus according to an exemplary embodiment of the invention;
FIG. 6 is a graph for explaining a scrolling method according to another exemplary embodiment of the invention;
FIG. 7 is a graph for explaining a scrolling method according to another exemplary embodiment of the invention; and
FIG. 8 is a graph for explaining a scrolling method according to another exemplary embodiment of the invention.

Exemplary embodiments of the invention will now be described below by reference to the attached Figures. The described exemplary embodiments are intended to assist the understanding of the invention, and are not intended to limit the scope of the invention in any way. Like reference numerals refer to like elements throughout.

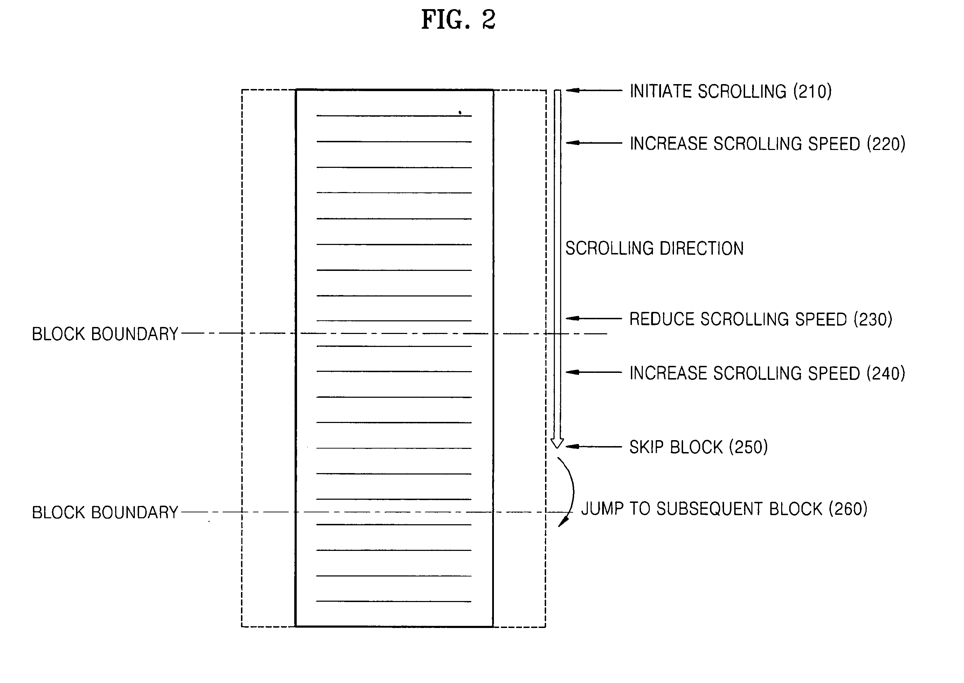

FIG. 2 is a diagram for explaining a scrolling method according to an exemplary embodiment of the invention. Referring to FIG. 2, all items are classified into a plurality of blocks according to their characteristics. For example, the items may be various types of data such as music files, documents, and names and addresses registered in an address book, and may be classified into a plurality of blocks according to various standards. For example, the items may be classified into a plurality of blocks according to the first letters of their names, according to their file sizes, or according to the dates of their most recent updates.

Referring to FIG. 2, in operation 210, scrolling begins. In operation 220, if the scrolling continues for more than a predetermined amount of time, the scrolling speed is increased continually or incrementally over stages while performing the scrolling. In operation 230, the scrolling speed is decreased when a boundary between a pair of adjacent blocks approaches. In operation 240, the scrolling speed is increased again after the block boundary is passed. In operation 250, a user may input a block skip command using an input device while the scrolling is performed or even when the scrolling is not performed. Then, in operation 260, a current block is skipped, thereby jumping to a subsequent block and highlighting a first item of the subsequent block. The user can use the block skip command to skip blocks until a block containing a desired item is displayed on a screen, and thus does not need to scroll through all items included in blocks other than the block containing the desired item.

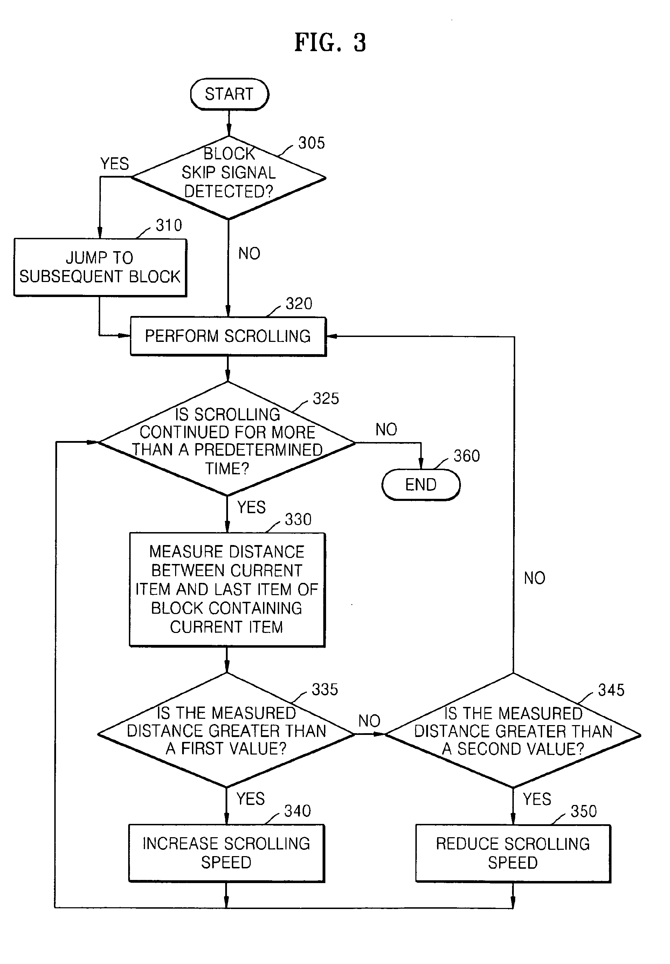

FIG. 3 is a flowchart illustrating a scrolling method according to an exemplary embodiment of the invention. Referring to FIG. 3, in operation 305, it is determined whether a user inputs a block skip signal using an input device.

In operation 310, if a block skip signal is detected, a current block is skipped, thereby jumping to a subsequent block and highlighting a first item included in the subsequent block on a screen. The block skipping operation may be performed at any time before, after, or during scrolling.

In operation 320, a scrolling apparatus performs scrolling at a predefined initial speed in response to a user input.

In operation 325, it is determined whether the scrolling continues for more than a predetermined amount of time.

In operation 360, if the scrolling does not continue for more than the predetermined time, the method ends.

In operation 330, if the scrolling operation does continue for more than the predetermined time, the scrolling apparatus measures a distance between an item (hereinafter referred to as the current item) currently being highlighted on a screen and a last item of a block containing the current item. The scrolling apparatus may be any type of device which can display data, for example, a desktop computer, a PDA, a mobile phone, or an MP3 player.

In operation 335, it is determined whether the measured distance is greater than a first predefined value (*e.g.,* if the number of items between the current item and the last item of the block containing the current item is much greater than the number of items between a first item of the block containing the current item and the current item).

In operation 340, if the measured distance is greater than the first predefined value used in operation 335, the scrolling apparatus increases the scrolling speed. The scrolling apparatus may increase the scrolling speed continually or incrementally over two or more stages.

In operation 345, it is determined if the measured distance is smaller than a second predefined value (e.g., if the number of items between the current item and the last item of the block containing the current item is much smaller than the number of items between the first item of the block containing the current item and the current item).

In operation 350, if the measured distance is smaller than the second predefined value used in operation 345, the scrolling apparatus reduces the scrolling speed and notifies the user that the subsequent block is approaching. If the measured distance is not smaller than the second predefined value, the method returns to operation 320.

In the method shown in FIG. 3, the scrolling speed may have maximum and minimum values. Thus, the scrolling apparatus may be prevented from increasing/decreasing the scrolling speed over/below the maximum/minimum speed.

Further, in blocks having a small number of items, the user may not have difficulty scrolling through all the items, because it would not take long to search through the items. Therefore, the scrolling apparatus may not change the scrolling speed for such blocks.

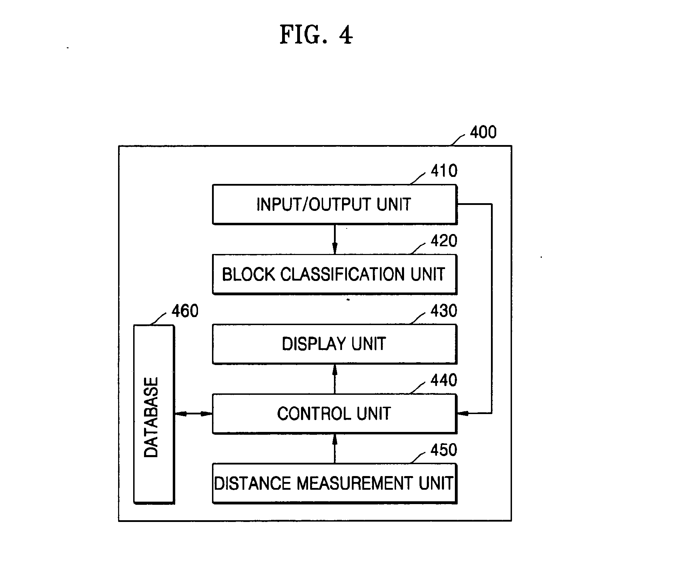

FIG. 4 is a block diagram of a scrolling apparatus 400 according to an exemplary embodiment of the invention. Referring to FIG. 4, the scrolling apparatus 400 includes an input/output unit 410, a block classification unit 420, a display unit 430, a scrolling control unit 440, a distance measurement unit 450, and a database 460.

The input/output unit 410 is an interface between the scrolling apparatus 400 and a user. The user may input commands to the scrolling apparatus 400 using the input/output unit 410. The input/output unit 410 may be a button, a touch screen, a keyboard, or a mouse for receiving user input.

The block classification unit 420 classifies a plurality of items to be displayed on a screen into a plurality of blocks according to the characteristics of the items. The user may decide using the input/output unit 410 whether the items are to be classified into a plurality of blocks according to a desired standard or an arbitrary standard. In other words, the user may decide to classify the items into a plurality of blocks according to the first letters of the names of the items or according to the file sizes of the items, as described above. Alternatively, the user may arrange the items on the screen in a certain manner and then classify the items into a plurality of blocks with reference to the arrangement.

The display unit 430 displays the items, and the database 460 stores information regarding the items which is needed for scrolling through the items.

The distance measurement unit 450 measures a distance between a current item and a last item of a block containing the current item (i.e., the number of items between the current item and the last item of the block containing the current item).

The scrolling control unit 440 controls the scrolling speed with reference to the location of an item, increasing the scrolling speed if the distance measured by the distance measurement unit 450 during the scrolling is greater than a predefined value, and reducing the scrolling speed if the distance measured by the distance measurement unit 450 during the scrolling is smaller than a second predefined value. Here, the scrolling control unit 440 may adjust the scrolling speed continually or incrementally over stages while preventing the scrolling speed from increasing over a predefined maximum or decreasing below a predefined minimum. When the user inputs a block skip command to the scrolling apparatus 400 via the input/output unit 410, the scrolling control unit 440 skips the block containing the current item and jumps to a block subsequent to the block containing the current item, and the display unit 430 displays a first item of the subsequent block.

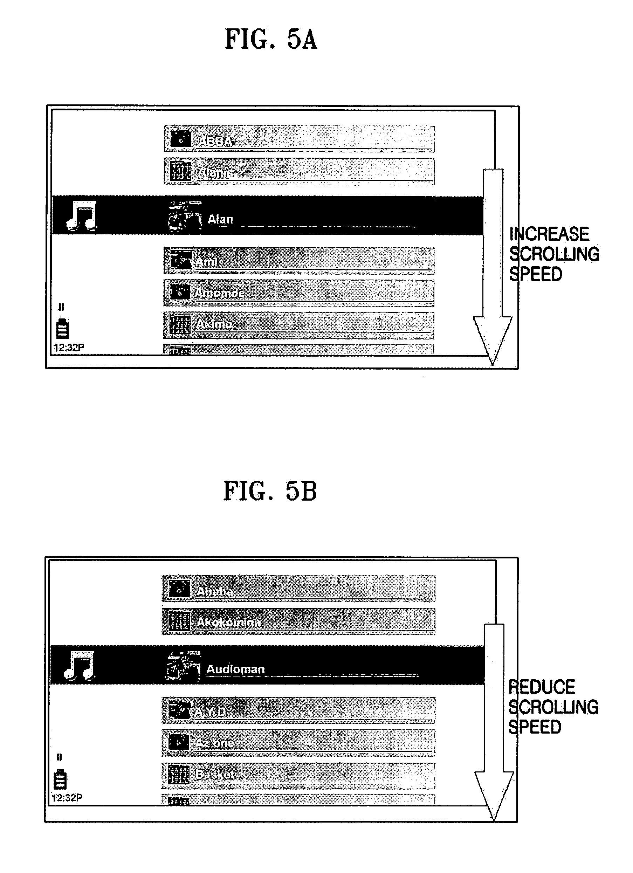

FIGS. 5A through 5D illustrate examples of a screen displayed by a scrolling apparatus according to an exemplary embodiment of the invention. Referring to FIGS. 5A through 5D, a plurality of items are classified into a plurality of blocks in such a manner that items whose names begin with the same letter belong to the same block, and the items are arranged in each block in alphabetical order.

Referring to FIG. 5A, scrolling begins with a first item "ABBA" of a first block including items whose names begin with the letter "A". Once the scrolling begins, the scrolling speed is increased continually or incrementally in stages.

Referring to FIG. 5B, as a second block including items whose names begin with the letter "B" approaches, the scrolling speed is reduced.

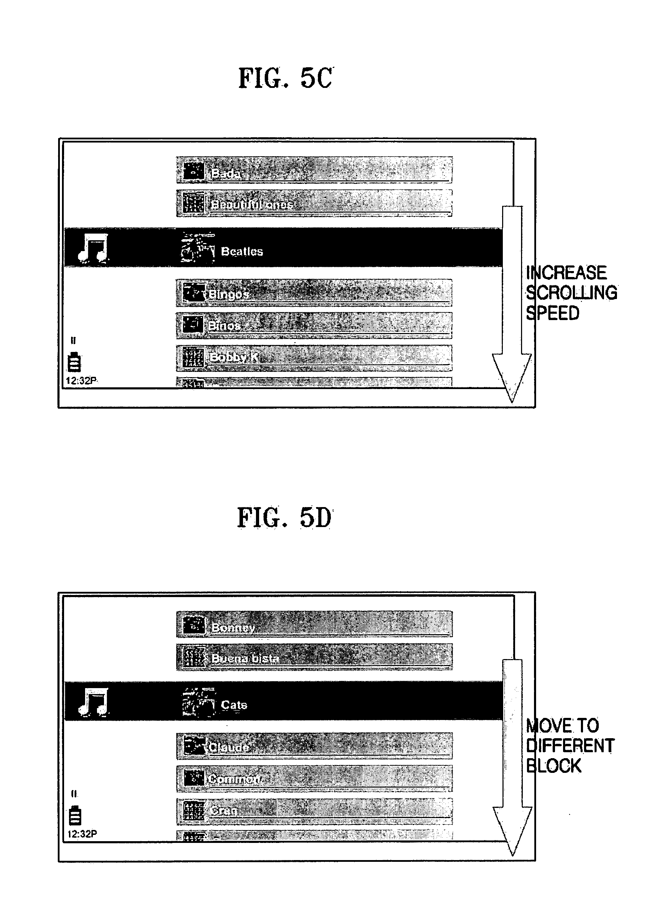

Referring to FIG. 5C, once the boundary between the first and second blocks is passed, the scrolling speed is increased again.

Referring to FIG. 5D, if a user inputs a block skip command while scrolling through the items of the second block, the second block is skipped, thereby jumping to a third block including items whose names begin with the letter "C" and highlighting a first item "Cats" of the third block on the screen.

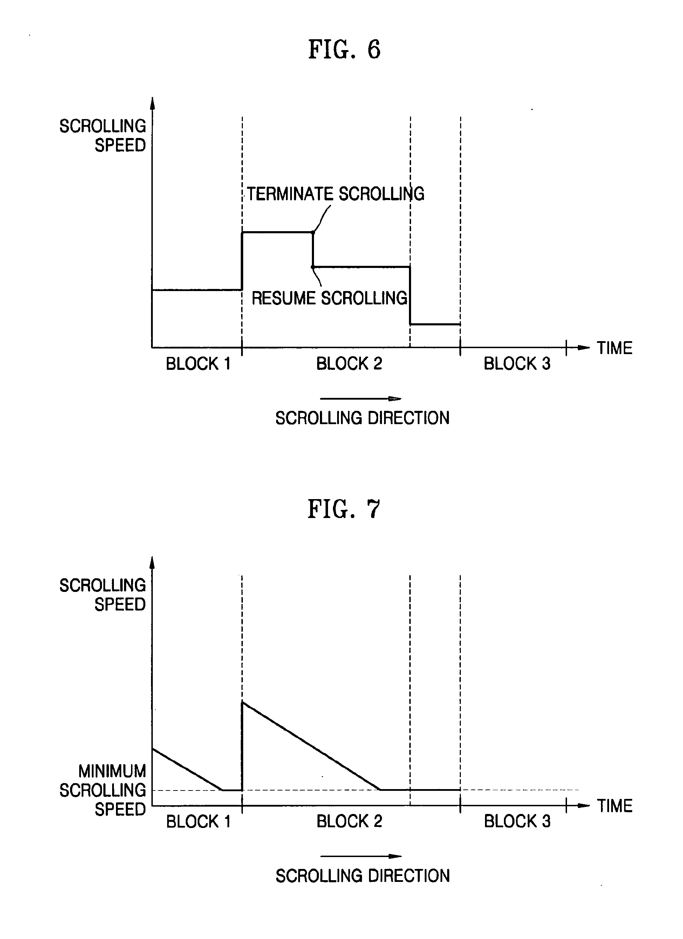

FIG. 6 is a graph for explaining a scrolling method according to another exemplary embodiment of the invention. Referring to FIG. 6, the horizontal axis represents time, the vertical axis represents scrolling speed, and blocks 1 through 3 are sequentially scrolled through. In this exemplary embodiment, the scrolling speed in a block is determined according to the quantity of items to be scrolled through, and does not continually increase or decrease throughout a block or between a pair of adjacent blocks.

More specifically, referring to FIG. 6, in block 1, the scrolling speed does not change, but is maintained at a first level corresponding to the number of items included in block 1. Next, since block 2 has more items than block 1, as soon as the boundary between blocks 1 and 2 is passed, the scrolling speed is increased to a second level which corresponds to the number of items included in block 2 and is thus higher than the first level. If a user stops scrolling through block 2 and then resumes the scrolling later, the scrolling speed is reduced to a third level which corresponds to the number of items between the item where the scrolling has been stopped and a first item of block 3, and is thus lower than the second level. Next, since block 3 has fewer items than block 1, as soon as the boundary between block 2 and block 3 is passed, the scrolling speed is reduced to a fourth level lower than the first level.

FIG. 7 is a graph for explaining a scrolling method according to another exemplary embodiment of the invention. Referring to FIG. 7, the horizontal axis represents time, the vertical axis represents scrolling speed, and blocks 1 through 3 are sequentially scrolled through. In this exemplary embodiment, the scrolling speed in a block continually decreases from an initial level that is determined according to the quantity of items to be scrolled through.

Referring to FIG. 7, the distance between a first item of block 1 and a first item of block 2 is measured, an initial scrolling speed for block 1 is determined with reference to the measured distance, and block 1 is scrolled through at the initial scrolling speed for block 1. Once the scrolling of block 1 begins, the scrolling speed is continually decreased from the initial scrolling speed for block 1. When the scrolling speed reaches a predefined minimum, it does not decrease any further and is maintained at the predefined minimum until the scrolling of block 1 is complete.

Next, as soon as the boundary between block 1 and block 2 is passed, the distance between the first item of block 2 and a first item of block 3 (*i.e.,* the quantity of items of block 2) is measured, an initial scrolling speed for block 2 is determined with reference to the measured distance, and block 2 is scrolled through at the initial scrolling speed for block 2. Since block 2 has more items than block 1, the initial scrolling speed for block 2 is higher than the initial scrolling speed for block 1. Once the scrolling of block 2 begins, the scrolling speed continually decreases from the initial scrolling speed for block 2. When the scrolling speed reaches the predefined minimum, it does not decrease any further and is maintained at the predefined minimum until the scrolling of block 2 is complete.

Next, as soon as the boundary between block 2 and block 3 is passed, the distance between the first item of block 3 and a last item of block 3 is measured. Block 3, however, is determined to have so few items that scrolling speed is not increased. Therefore, block 3 is scrolled through at the predefined minimum scrolling speed.

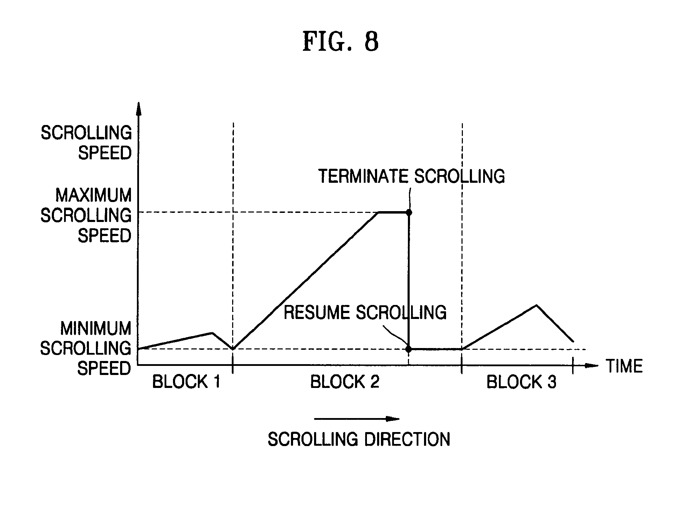

FIG. 8 is a graph for explaining a scrolling method according to another exemplary embodiment of the invention. Referring to FIG. 8, the horizontal axis represents time, the vertical axis represents scrolling speed, and blocks 1 through 3 are sequentially scrolled. In this exemplary embodiment, the rate at which the scrolling speed increases or decreases may vary according to the quantity of items from a current item to the last item of the block containing the current item.

Referring to FIG. 8, in block 1, the scrolling speed gradually increases until the quantity of items to be scrolled through reaches a predefined value. Once the quantity of items to be scrolled through reaches the predefined value, the scrolling speed gradually decreases until it reaches a predefined minimum at a boundary between block 1 and block 2.

Next, in block 2, the scrolling speed gradually increases at a greater acceleration than in block 1. This is because the distance between a first item of block 2 and a first item of block 3 is measured, and since the measured distance is greater than the distance between a first item of block 1 and the first item of block 2, the scrolling speed is increased more rapidly in block 2 than in block 1. However, according to this exemplary embodiment, even if block 2 has twice as many items as block 2, it does not necessarily take twice as much time to scroll block 2 as to scroll block 1.

When a user stops scrolling across block 2 and resumes the scrolling later, the scrolling speed may not increase, but may be maintained at the predefined minimum if fewer than a predetermined number of items are left to be scrolled. Thereafter, block 3 is scrolled.

The invention can be realized as computer-readable code written on a computer-readable recording medium. The computer-readable recording medium may be any type of recording device in which data is stored in a computer-readable manner. Examples of the computer-readable recording medium include a ROM, a RAM, a CD-ROM, a magnetic tape, a floppy disc, an optical data storage, and a carrier wave (e.g., data transmission through the Internet).

According to an embodiment of the invention, a plurality of items are classified into a plurality of blocks, and the scrolling speed is adjusted according to the location of an item currently being highlighted on a screen in a block containing the item. Therefore, a user can identify the location of an item currently displayed on a screen relative to the locations of other items and skip blocks instead of spending much time scrolling through all items in each block until a desired item is discovered.

While the invention has been particularly shown and described with reference to exemplary embodiments thereof, the invention is not limited to these embodiments. It will be understood by those of ordinary skill in the art that various changes in form and details may be made therein without departing from the spirit and scope of the invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of scrolling through a plurality of items that are classified into a plurality of blocks, the method comprising:
measuring (330) a distance between a current item currently being highlighted on a screen and a last item of a block containing the current item; and
controlling (340, 350) scrolling speed based on the measured distance.

2. The method of claim 1, further comprising classifying the items into the blocks according to characteristics of the items or an external input.

3. The method of claim 1 or 2, wherein the controlling comprises increasing (340) the scrolling speed if the measured distance is greater than a predefined value (335).

4. The method of claim 1 or 2, wherein the controlling comprises reducing (350) the scrolling speed if the measured distance is smaller than a predefined value.

5. The method of any preceding claim, wherein the controlling comprises maintaining the scrolling speed at a predetermined level corresponding to the measured distance.

6. The method of claim 3, 4 or 5, wherein the rate at which the scrolling speed changes over time is determined based on the measured distance.

7. The method of any of claims 3-6, wherein the step of increasing the scrolling speed comprises continually increasing the scrolling speed.

8. The method of any of claims 3-6, wherein the step of increasing the scrolling speed comprises incrementally increasing the scrolling speed over at least two stages.

9. The method of any preceding claim, wherein the controlling further comprises preventing the scrolling speed from being increased over a predefined level.

10. The method any of claims 4-9, wherein the decreasing the scrolling speed comprises continually reducing the scrolling speed.

11. The method of any of claims 4-9, wherein the decreasing the scrolling speed comprises incrementally reducing the scrolling speed over at least two stages.

12. The method of any preceding claim, wherein the step of controlling further comprises preventing the scrolling speed from being reduced below a predefined level.

13. The method of any preceding claim, further comprising, if a predetermined input signal is received, highlighting an item of a block other than the block containing the current item.

14. The method of any preceding claim, wherein, if the current item is a first item in the block and the measured distance is equivalent to an overall block distance, then the scrolling speed is controlled to be maintained at a predetermined level corresponding to the overall block distance.

15. A computer readable medium storing a computer program for executing a method of scrolling through a plurality of items that are classified into a plurality of blocks, the method comprising:
measuring a distance between a current item currently being highlighted on a screen and a last item of a block containing the current item; and
controlling scrolling speed based on the measured distance.

16. The computer readable medium storing a computer program for executing the method of claim 15, the method further comprising classifying the items into the blocks according to characteristics of the items or an external input.

17. The computer readable medium storing a computer program for executing the method of claim 15 or 16, wherein the controlling comprises increasing the scrolling speed if the measured distance is greater than a predefined value.

18. The computer readable medium storing a computer program for executing the method of any of claims 15-17, wherein the controlling comprises reducing the scrolling speed if the measured distance is smaller than a predefined value.

19. The computer readable medium storing a computer program for executing the method of any of claims 15-18, wherein the controlling comprises maintaining the scrolling speed at a predetermined level corresponding to the measured distance.

20. An apparatus (400) for scrolling through and displaying a plurality of items that are classified into a plurality of blocks, the apparatus comprising:
a distance measurement unit (450) operable to measure a distance between a current item currently being highlighted on a screen and a last item of a block containing the current item; and
a scrolling control unit (440) operable to control scrolling speed based on the measured distance.

21. The apparatus of claim 20, further comprising a block classification unit (420) operable to classify the items into the blocks according to characteristics of the items or a user input.

22. The apparatus of claim 20 or 21, wherein the scrolling control unit (440) is operable to increase the scrolling speed if the measured distance is greater than a predefined value.

23. The apparatus of any of claims 20-22, wherein the scrolling control unit (440) is operable to reduce the scrolling speed if the measured distance is smaller than a predefined value.

24. The apparatus of any of claims 20-23, wherein the scrolling control unit (440) is operable to maintain the scrolling speed at a predetermined level corresponding to the measured distance.
